# EUROPEAN PATENT APPLICATION

(11) **EP 2 293 182 A2**
(43) Date of publication of application: **09.03.2011**
(21) Application number: 10007994.6
(22) Date of filing: 30.07.2010
(51) Int. Cl.: G06F 3/14

(54) **Multi-image display apparatus and image display apparatus**

(30) Priority: 30.07.2009 JP 2009177302
(71) Applicant: Sanyo Electric Co., Ltd., Osaka 570-8677 (JP); SANYO Technology Center (Shenzhen) Co., Ltd., Shenzhen (CN)
(72) Inventor: Yoshida, Tomonori, Moriguchi City Osaka, 570-8677 (JP); Murakoshi, Misutaka, Moriguchi City Osaka, 570-8677 (JP); Sun, Jiaqiang, Shenzhen (CN)
(74) Representative: Glawe, Delfs, Moll

(57) **Abstract**

A multi-image display apparatus includes a plurality of image display apparatuses which are connected in series. The plurality of image display apparatuses each include: an input unit through which an image signal is inputted; a display unit which displays an image signal; a driver unit which performs processing of reducing deterioration in frequency characteristics on an inputted image signal; an output unit which selectively outputs an image signal which is outputted from the driver unit or the image signal which does not pass through the driver unit and a termination unit which terminates the image signal. When none of the display unit of the image display apparatuses displays an image signal, the termination is performed using one of the termination unit of the display apparatuses.

## Description

### BACKGROUND OF THE INVENTION

### 1. Field of the Invention

The present invention relates to an image display apparatus used in combination with other image display apparatuses, and to a multi-image display apparatus comprised by a plurality of said image display apparatus.

### 2. Description of Related Art

In recent years, multi-image display apparatuses comprised by a plurality of image display apparatuses are becoming common. The multi-image display apparatus can display a large single image using a plurality of image display apparatuses. On the other hand, the multi-image display apparatus can display same images, such as odds offered by a bookmaker, on a plurality of image display apparatuses.

Some of the multi-image display apparatuses employ so-called daisy chain connection in which image display apparatuses are connected in series. In daisy chain connection, since image signals can be transmitted sequentially from an upstream image display apparatus to a downstream image display apparatus, the structure of the multi-image display apparatus can be simplified (e.g. wiring).

In daisy chain connection, each of the image display apparatuses outputs an image signal adjusted by its driver unit to the subsequent image display apparatus in order to reduce the deterioration of frequency characteristics of the image signal transmitted to the subsequent apparatuses. However, in order to operate the driver unit, it requires an electric power of 0.1 to 1 W, for example. When the image display apparatus is in a displaying state, it consumes a lot of power and thus the power consumption in the driver unit is not a big problem since the power consumption in the driver is small compared to the total consumption of the display apparatus. However, when the image display apparatus is in a standby state, since the ratio of power consumption in the driver unit to total power consumption is large, whether or not the driver unit operates is a large issue. In particular, it is required that the power consumption is 1W or lower during the standby mode, and it is difficult to meet this requirement when the driver unit is operated.

### SUMMARY OF THE INVENTION

A multi-image display apparatus according to the present invention includes a plurality of image display apparatuses connected in series, wherein each of the image display apparatuses comprises:
an input unit through which an image signal is inputted;
a display unit which displays an image signal;
a processing unit which performs processing necessary to cause the display unit to display an image signal inputted from the input unit;
a driver unit which performs processing of reducing deterioration in frequency characteristics on an image signal inputted from the input unit;
an output unit which selectively outputs an image signal which is outputted from the driver unit or the image signal which does not pass the driver unit; and
a termination unit which terminates the image signal, and wherein,
when none of the display unit of the image display apparatuses displays an image signal, the termination is performed using one of the termination unit of the display apparatuses.

An image display apparatus includes:
an input unit through which an image signal is inputted;
a display unit which displays an image signal;
a processing unit which performs processing necessary to cause the display unit to display an image signal inputted from the input unit;
a driver unit which performs processing of reducing deterioration in frequency characteristics on an image signal inputted from the input unit; and
an output unit which selectively outputs an image signal which is outputted from the driver unit or the image signal which does not pass the driver unit.

### BRIEF DESCRIPTION OF THE DRAWINGS

In the accompanying drawings:
FIG. 1 is a block diagram illustrating a structural example of a multi-image display apparatus according to an embodiment of the present invention;
FIG. 2 is a block diagram illustrating a structural example of an image display apparatus according to the embodiment of the present invention; and
FIG. 3 is a flow chart illustrating an example of switching control of an output switching unit which is included in the image display apparatus according to the embodiment of the present invention.

### DETAILED DESCRIPTION OF PREFERRED EMBODIMENTS

An image display apparatus and a multi-image display apparatus according to an embodiment of the present invention are described below with reference to the drawings. A structural example and operation example of the multi-image display apparatus are described first.

### <<Multi-image Display Apparatus>>

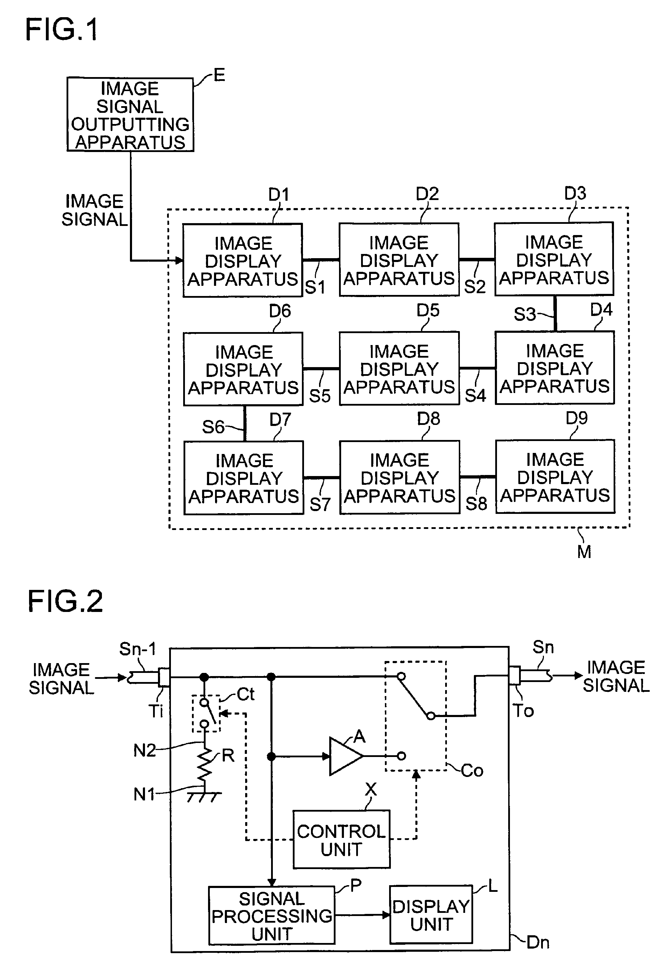

FIG. 1 is a block diagram illustrating a structural example a multi-image display apparatus. As illustrated in FIG. 1, the multi-image display apparatus, denoted by M, includes a plurality of image display apparatuses D. In the following description, the apparatuses D are individually denoted by Dn (n represents a natural number), and an apparatus Dn to which a larger n is suffixed is located further downstream among a chain of serially connected apparatuses D. The apparatus M of FIG. 1 has nine apparatuses D1 to D9, three apparatuses in the horizontal direction and three apparatuses in the vertical direction.

Each of the apparatuses D is connected by signal lines S. The signal lines S are individually denoted by Sn, and a signal line Sn to which a larger n is suffixed is connected to an apparatus Dn that is located further downstream. The signal line which connects the apparatuses Dn and Dn+1 and which inputs an image signal outputted from the apparatus Dn to the apparatus Dn+1 is specially denoted by Sn. The apparatus D9, which is at the tail end of the chain of apparatuses D in the apparatus M of FIG. 1, does not have a signal line S for outputting an image signal to the subsequent apparatus. The apparatus M therefore has eight signal lines, S1 to S8.

To the apparatus D1, which is at the head of the chain of apparatuses D in the apparatus M, an image signal outputted from an image signal outputting apparatus E is inputted. The apparatus D1 outputs the inputted image signal to its subsequent apparatus D2 through the signal line S1, irrespective of whether or not the image signal is to be displayed by the apparatus D1. Similarly, the apparatus Dn outputs an image signal inputted through the signal line Sn-1 to its subsequent apparatus Dn+1 through the signal line Sn, irrespective of whether or not the image signal is to be displayed by the apparatus Dn. The image signal is thus transmitted and reaches the apparatus D9 which is at the tail end of the chain of apparatuses D. The operation of the individual apparatus Dn is described later.

As described above, an image signal outputted from the image signal outputting apparatus E is inputted to each of the apparatuses D1 to D9. Each of the apparatuses D1 to D9 displays an entire portion of respective image signal (a multi-screen mode) or different portion of the image signal (a full-screen mode).

Here the image signal outputting apparatus E may be, for example, a receiving apparatus that receives television broadcasting, a reproducing apparatus that outputs an image recorded on a recording medium, or a personal computer.

### <<Image Display Apparatus>>

Next, an image display apparatus according to an embodiment of the present invention is described with reference to the drawings. FIG. 2 is a block diagram illustrating a structural example of the image display apparatus. The apparatus Dn of FIG. 2 is the apparatus employed for a middle part of the chain of apparatuses D in the apparatus M of FIG. 1 (i.e. the apparatus of Fig.2 is not the one employed for the head or the tail end of the chain).

As illustrated in FIG. 2, the apparatus Dn includes: an input terminal Ti to which the signal line Sn-1 is connected and an image signal is inputted; a terminating resistor R which terminates an image signal inputted to the input terminal Ti; a termination switching unit Ct which switches a enabled/disabled status of the connection between the input terminal Ti and the resistor R; a signal processing unit P which performs given processing on an image signal inputted to the input terminal Ti; a display unit L which displays an image signal processed by the unit P; a driver unit A which adjusts the electric current value of an image signal inputted to the terminal Ti and outputs the adjusted image signal; an output switching unit Co which selectively outputs an image signal which is adjusted by the driver unit A or an image signal which is not adjusted by the driver unit A; an output terminal To which receives an image signal outputted from the unit Co and outputs the received image signal to its connected signal line Sn; and a control unit X which controls switching in the unit Co and in the unit Ct.

The terminating resistor R has a given resistance value (for example, 75 Ω) in order to make an image signal displayed by an appropriate voltage value through impedance matching. If the resistance value is altered to the other value, the alteration distorts the waveform of the image signal and an image displayed by the display unit L deteriorates. One end N1 of the resistor R is grounded and the other end N2 is connected to the unit Ct. By using the unit Ct, connection or disconnection between the terminal Ti and the other end N2of the resistor R is switched.

The signal processing unit P performs, when the apparatus M displays in the multi-screen mode, processing such as scaling (enlargement or reduction) or luminance adjustment on an inputted image signal, and outputs an image signal adapted for the display unit L. On the other hand, when the apparatus M displays in the full-screen mode, the unit P further performs processing of obtaining a predetermined portion from the image signal, in addition to the processing executed in the multi-screen mode. The display unit L is constituted by a liquid crystal panel, for example, and displays an image signal outputted from the unit P. When the apparatus Dn is in a standby state, power is not supplied to the unit P and the display unit L, and therefore the operation is halted during such periods.

The driver unit A performs an adjustment of an inputted image signal such that the current value of the image signal becomes a predetermined value, and then outputs the image signal. The frequency characteristics of the image signal deteriorate when the signal is transmitted through a plurality of signal lines S and apparatuses D. Specifically, when the image signal is a high-resolution signal (which includes a fairly large high-frequency components, for example, Ultra Extended Graphics Array (UXGA)), the deterioration becomes particularly noticeable. For this reason, the driver unit A performs the image signal adjustment, and inhibits the frequency characteristics deterioration of an image signal to be inputted to the subsequent apparatuses D.

In the apparatus D1 which is at the head of the chain of apparatuses D, none of the signal lines S is connected to the input terminal Ti and, instead, a signal line which transmits an image signal outputted from the image signal outputting apparatus E is connected. In the apparatus D9 at the tail end of the chain of apparatuses D, none of the signal lines is connected to the output terminal To and no image signal is outputted from the apparatus D9.

In the below, a transmission method of an image signal performed by the apparatuses Dn is explained, referring to an example of switching operation of the unit Co and of the unit Ct. Here, the switching operation of the unit Co and the unit Ct is controlled by the control unit X.

### <<Output Switching Unit>>

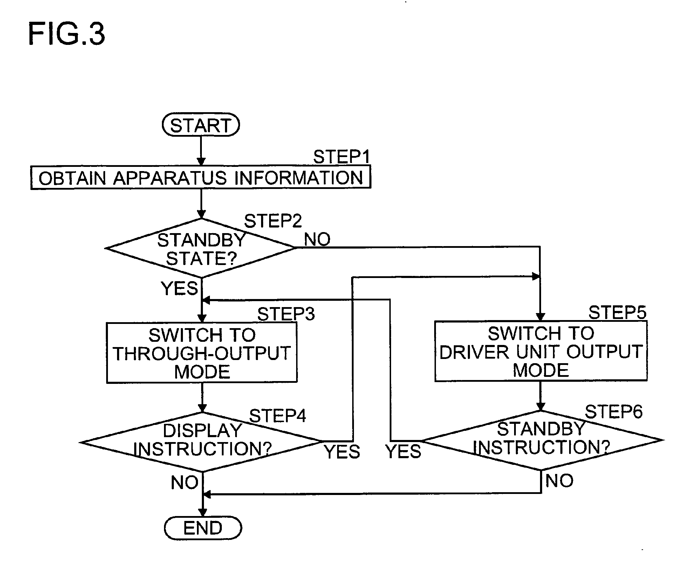

FIG. 3 is a flow chart illustrating an example of switching operation of the output switching unit included in the above-described image display apparatus. As shown in FIG. 3, when the switching operation has begun, the control unit X first acquires apparatus information (STEP 1). Here, the apparatus information is, for example, information indicating the state of the apparatus Dn (displaying state or standby state) and information indicating an instruction to switch the states.

Next, the control unit X determines whether the apparatus Dn is in a standby state or a displaying state based on the apparatus information acquired in STEP 1 (STEP 2). When the apparatus Dn is in a standby state (YES in STEP 2), a switching control is performed such that the unit Co operates as a through-output mode, where the unit Co outputs an image signal inputted directly from the input terminal Ti (STEP 3). When the unit Co is set to the through-output mode in STEP 3, power is not supplied to the driver unit A and thus the unit A is shut down.

Then, the control unit X determines whether or not an instruction to make the apparatus Dn in a displaying state is inputted, based on the apparatus information acquired in STEP 1 (STEP 4). When it is determined that the instruction is displaying state not inputted (NO in STEP 4), the switching operation is terminated. In this case, the apparatus Dn is in a standby state and the unit Co is in the through-output mode.

On the other hand, when the apparatus Dn is in a displaying state (NO in STEP 2), or when the instruction to make the apparatus Dn in a displaying state is inputted (YES in STEP 4), the control unit X performs the switching control such that the unit Co outputs an image signal which is outputted from the driver unit A (i.e. the unit Co is in a driver unit output mode) (STEP 5).

Then, the control unit X determines whether or not the instruction to make the apparatus Dn in a standby state is inputted based on the apparatus information acquired in STEP 1 (STEP 6). When the instruction is not inputted (NO in STEP 6), the switching operation is terminated. In this case the apparatus Dn is in a displaying state and the unit Co is in the driver unit output mode.

On the other hand, when the instruction to make the apparatus Dn in a standby state is inputted (YES in STEP 6), it proceeds to STEP 3. In other words, the control unit X performs switching control such that the unit Co acts as the through-output mode (STEP 3).

By switching the output switching unit Co as described above, it can reduce the deterioration of frequency characteristics of the image signal to be displayed on subsequent apparatuses D, by outputting an image signal which is adjusted by the driver unit A, when the apparatus is in a displaying state. Further, when the apparatus Dn is in a standby state, where the power consumption of the driver unit A is significant, it can reduce the power consumption by outputting an image signal that bypasses the driver unit A.

The apparatus M may be structured such that a switching of the output switching unit Co for each apparatus Dn can be controlled at user's discretion. For instance, when the user prefers to reduce image quality deterioration in the subsequent apparatuses D, rather than to reduce power consumption, the apparatus M may be structured such that the unit Co operates as the driver unit output mode, even though the apparatus Dn is in a standby state. Specifically, for example, when the "power saving during standby mode" is ON, the state of the unit Co may be kept in the through-output state, and when the mode is OFF, the state of the unit Co may be kept in the driver unit output mode.

When the user prefers to reduce power consumption during a displaying state, it may be constituted such that the unit Co to operate as the through-output mode, even though the apparatus Dn is in a displaying state. Specifically, when a "power save during displaying" mode is ON, for example, the apparatus Dn may keep the unit Co in through-output mode, whereas when the mode is OFF, the state of the unit Co may be switched as shown in FIG. 3.

As for the apparatus D9 which is at the tail end of the chain of apparatuses D, the unit Co may be kept to the through-output mode since there are no apparatuses D subsequent to the apparatus D9. For instance, the unit Co may be set to through-output mode when the control unit X identifies the apparatus Dn as the tail end apparatus D9 based on the apparatus information acquired in STEP 1 of FIG. 3.

Further, the control unit X may determine whether or not the apparatus Dn is the tail end apparatus D9 based on other information such as arrangement information of the apparatuses within the apparatus M inputted by a user, information indicating whether or not signal lines S is connected to the terminal To, or information indicating whether or not the apparatuses D is connected with a signal lines S which is connected to the terminal To.

The switching operation shown in FIG. 3 may be executed when an instruction (for example, an instruction to switch between the displaying state and the standby state, or an instruction to switch to the "power saving during standby" mode) from the user is inputted.

### <<Termination Switching Unit>>

The switching operation of the unit Ct is described next. The switching operation of the unit Ct is controlled by the control unit X and, for example, in a manner described below.

### [First Control Example]

In this control example, basically, the unit Ct is turned off (the other end N2 of the terminating resistor R and the terminal Ti are not connected). However, as for the apparatus D9, the unit Ct is turned on (the other end N2 and the input terminal Ti are connected).

For example , when the unit Ct is turned on in the apparatus D1 to D8, which constitute a head part or a middle part of the chain, and when one of the unit Co in these apparatuses Dn is set to through-output mode, the terminating resistors R in the apparatus Dn and Dn+1 would be connected parallel. In this case, the resistance value decreases by half from the prescribed value 75 Ω (when two resistors R are connected in parallel), and as a result, the impedance matching becomes difficult.

Accordingly, by turning off the unit Ct in all apparatuses D except for the tail end apparatus D9, it can inhibit the image signal waveform from being distorted, and can reduce the deterioration of images displayed on respective apparatuses D.

### [Second Control Example]

In this control example, the switching operation of the unit Ct is interlocked with the switching operation of the unit Co. Particularly, when the unit Co is set to through-output mode, the unit Ct is turned off, and when the unit Co is set to the driver unit output mode, the unit Ct is turned on. However, the unit Ct in the apparatus D9 is kept on regardless of the mode of unit Co.

According to this structure, it can perform an impedance matching even when the unit Co is in the through-output mode, as well as in the first control example. Thus, it can prevent an image signal waveform from being distorted, and can inhibit the deterioration of images displayed on the respective apparatuses D.

Further, when the unit Co is in the driver unit output mode, an image signal adjusted by the driver unit A becomes an image signal terminated by the terminating resistor R. Therefore, it can prevent the image signal outputted from the driver unit A from being over amplified.

In the above first and second control examples, the control unit X may determine whether or not the apparatus Dn is the tail end apparatus D9 based on other information such as arrangement information of image display apparatuses D within the apparatus M inputted by the user, information indicating whether or not the signal lines S is connected to the output terminal To, or information indicating whether or not the apparatuses D is connected to the signal lines S which is connected to the output terminal To.

### <<Modification Example>>

In the above-mentioned apparatuses D the terminating resistor R is applied to terminate an image signal. Instead, the other well-known terminating circuit may be employed.

The above-mentioned apparatuses D operations of the control unit X, the unit Ct, and the unit Co may be achieved by a microcomputer or other control devices. Further, all or some of functions implemented by this control device may be described as a program, and those functions may be realized by executing this program on a program executing apparatus (such as a computer).

The present invention is not limited to the above-mentioned embodiments. The apparatus M of FIG. 1 and the apparatus Dn of FIG. 2 may be implemented solely by hardware or by a combination of hardware and software. When software is used as a component of the apparatus M or the apparatus Dn, a block diagram of a unit implemented by the software represents a function block diagram of the unit.

In the above, the embodiment of the present invention has been described. However, the scope of the present invention is not limited thereto, and the present invention may be implemented by being subjected to various modifications without departing from the gist of the present invention.

## Claims

1. A multi-image display apparatus, comprising a plurality of image display apparatuses connected in series, wherein each of the image display apparatuses comprises:
an input unit through which an image signal is inputted;
a display unit which displays an image signal;
a processing unit which performs processing necessary to cause the display unit to display an image signal inputted from the input unit;
a driver unit which performs processing of reducing deterioration in frequency characteristics on an image signal inputted from the input unit;
an output unit which selectively outputs an image signal which is outputted from the driver unit or the image signal which does not pass the driver unit; and
a termination unit which terminates the image signal, and wherein,
when none of the display unit of the image display apparatuses displays an image signal, the termination is performed using one of the termination unit of the display apparatuses.

2. An image display apparatus, comprising:
an input unit through which an image signal is inputted;
a display unit which displays an image signal;
a processing unit which performs processing necessary to cause the display unit to display an image signal inputted from the input unit;
a driver unit which performs processing of reducing deterioration in frequency characteristics on an image signal inputted from the input unit; and
an output unit which selectively outputs an image signal which is outputted from the driver unit or the image signal which does not pass the driver unit.

3. An image display apparatus according to claim 2, wherein,
the output unit outputs the image signal which is outputted from the driver unit when the display unit displays an image signal, and
the output unit outputs the image signal which does not pass the driver unit, when the display unit does not display an image signal.

4. An image display apparatus according to claim 3, further comprising a termination unit which terminates an image signal, wherein
the termination unit does not terminate the image signal when the display unit does not display the image signal.
